# EUROPEAN PATENT APPLICATION

(11) **EP 4 280 116 A1**
(43) Date of publication of application: **22.11.2023**
(21) Application number: 23174020.0
(22) Date of filing: 17.05.2023
(51) Int. Cl.: G06N 3/091, G06N 3/09, G06N 3/04

(54) **INTELLIGENT MACHINE LEARNING CLASSIFICATION AND MODEL BUILDING**

(30) Priority: 20.05.2022 US 202217749427
(71) Applicant: Nokia Solutions and Networks Oy, 02610 Espoo (FI)
(72) Inventor: LEHMANN, Gerald, 12101 Berlin (DE); KUSHNIR, Dan, Springfield, NJ 07081 (US); ABLE, Maria, 82061 Neuried (DE); MEYER, Gerald, 81245 Munich (DE); UZUNALIOGLU, Huseyin, Winchester, MA 01890 (US); SEIDL, Robert, 82549 Konigsdorf (DE)
(74) Representative: Nokia EPO representatives

(57) **Abstract**

Systems, methods, and software for training a machine learning model. The system utilizes training data to train the machine learning model across multiple epochs. The system prepares additional training data by: selecting a set of samples that are unclassified, operating the machine learning model to predict labels that classify the samples, determining an uncertainty of the labels predicted by the machine learning model, calculating a ranking score for each of the samples in the set, selecting a subset of the samples that have more than a threshold ranking score, and submitting the subset to a client for replacement labels. The system receives the replacement labels from the client, and trains the machine learning model, using the subset of the samples as the training data. The labels predicted by the machine learning model for the subset are replaced with corresponding replacement labels from the client.

## Description

### Technical Field

This disclosure is related to the field of machine learning, and in particular, to training machine learning models to classify sets of data.

### Background

Labeled data is an important resource for systems that employ supervised learning to train machine learning models. Humans perform labeling by manually reviewing a sample (e.g., an image), and classifying the sample. After a desired number of samples have been labeled, the samples may be utilized as training data. This training data is used to adjust the output of a machine learning model, such as a Deep Neural Network (DNN).

Fully training a machine learning model may require hundreds of thousands, or even millions, of labeled samples. Furthermore, machine learning models that perform different tasks may use different sets of classifiers for training data. For example, a DNN that identifies the presence of animals within a picture may utilize different classifiers than a DNN which identifies the presence of vegetation. This means that classifiers used for training one machine learning model are often not applicable to other machine learning models.

Because the labeling of samples is performed manually, involves a vast number of samples, and is not broadly re-usable between machine learning models, a great deal of human interaction is required in order to prepare training data for machine learning models. This increases expense, while also reducing the speed at which machine learning models are trained.

### Summary

Described herein is a system and associated method for intelligently selecting samples for labeling, such as labeling by a human. That is, while labels for many samples may be predicted automatically by a machine learning model that is being trained by the system, the system also selects certain samples for replacement labels (e.g., by a human). In one embodiment, samples that have already been predicted as having labels by a machine learning model, but have a largest amount of uncertainty associated with their predicted labels, are selected for enhanced labeling.

By intelligently using human input to label those samples which are the most difficult for a machine learning model to interpret, these systems and methods ensure that each piece of human input provides substantial value to the training process. One technical benefit is that the system and method utilize a notably smaller amount of human labeling during training for a machine learning model. This reduces the labor and expense related to training the machine learning model, while maintaining training quality.

One embodiment includes a system for training a machine learning model. The system includes at least one processor, and at least one memory including computer program code. The at least one memory and the computer program code are able to, with the at least one processor, cause the system at least to perform operations. The operations include storing the machine learning model, and utilizing training data to train the machine learning model across multiple epochs. The at least one memory and the computer program code is further able to, with the at least one processor, cause the system at least to prepare additional training data between the epochs by: selecting a set of samples that are unclassified, operating the machine learning model to predict labels that classify the samples, determining an uncertainty of the labels predicted by the machine learning model, calculating a ranking score for each of the samples in the set based at least on an uncertainty for a corresponding prediction for a label, selecting a subset of the samples that have more than a threshold ranking score, and submitting the subset to a client for replacement labels. The at least one memory and the computer program code is further able to, with the at least one processor, cause the system at least to receive the replacement labels from the client, and train the machine learning model, using the subset of the samples as the training data, wherein the labels predicted by the machine learning model for the subset are replaced with corresponding replacement labels from the client.

In another embodiment, the at least one memory and the computer program code is further able to, with the at least one processor, cause the system at least to identify a first period of time for performing an epoch of training on the machine learning model, identify a second period of time for a client to generate a replacement label for a sample, and dynamically select a number of the samples to include in the subset, by dividing the first period of time by the second period of time to determine an expected number of the samples that the client is capable of generating replacement labels for during the epoch.

In another embodiment, the client comprises one of multiple clients, and the at least one memory and the computer program code is further able to, with the at least one processor, cause the system at least to modify the number of the samples to include in the subset, based on a number of the multiple clients.

In another embodiment, the at least one memory and the computer program code is further able to, with the at least one processor, cause the system at least to dynamically provide a next sample in the subset, that has not yet received a replacement label, to the client in response to receiving a replacement label from the client for a prior sample.

In another embodiment, the at least one memory and the computer program code is further able to, with the at least one processor, cause the system at least to submit the subset to the client by adding the samples from the subset to a buffer, and flush the buffer in response to the machine learning model completing an epoch of training.

In another embodiment, the at least one memory and the computer program code is further able to, with the at least one processor, cause the system at least to receive the replacement labels from the client while performing training of the machine learning model during an epoch, wherein the replacement labels from the client provided during an epoch are used for training data for a next epoch.

In another embodiment, the at least one memory and the computer program code is further able to, with the at least one processor, cause the system at least to halt training of the machine learning model, based on a classification performance score of the machine learning model.

In another embodiment, the at least one memory and the computer program code is further able to, with the at least one processor, cause the system at least to halt selecting and submitting samples to the client, based on a classification performance score of the machine learning model.

In another embodiment, the at least one memory and the computer program code is further able to, with the at least one processor, cause the system at least to determine the uncertainty as a score via at least one technique of entropy calculation, similarity of samples, calculated distance of samples, or model uncertainty.

In another embodiment, the at least one memory and the computer program code is further able to, with the at least one processor, cause the system at least to include a predefined number of samples having a highest amount of uncertainty within the subset.

In another embodiment, the at least one memory and the computer program code is further able to, with the at least one processor, cause the system at least to initiate the training, and submission of the subset to a client for replacement labels, in response to a request that defines classes for the labels, includes a pointer to the set of the samples, and defines an end condition for halting training of the machine learning model and halting labeling of the samples.

In another embodiment, the at least one memory and the computer program code is further able to, with the at least one processor, cause the system at least to activate a model-optimization routine for the machine learning model in response to determining that a change in performance of the machine learning model across the epochs is less than a threshold amount.

In another embodiment, the at least one memory and the computer program code is further able to, with the at least one processor, cause the system at least to calculate the ranking score by determining a score for each object depicted within a sample, and aggregating the scores for the objects within the sample.

In another embodiment, the at least one memory and the computer program code is further able to, with the at least one processor, cause the system at least to supplement the training data for the machine learning model with the set of the samples, wherein the labels predicted by the machine learning model for the subset are replaced with corresponding replacement labels from the client, and train the machine learning model with the training data that was supplemented.

In another embodiment, the at least one memory and the computer program code is further able to, with the at least one processor, cause the system at least to supplement prior, already labeled training data for the machine learning model with the subset of the samples, and utilize a whole training set comprising the subset and the prior training data as to train the machine learning model.

A further embodiment is a method for training a machine learning model. The method includes storing the machine learning model, utilizing training data to train the machine learning model across multiple epochs, preparing additional training data between epochs by selecting a set of samples that are unclassified, operating the machine learning model to predict labels that classify the samples, determining an uncertainty of the labels predicted by the machine learning model, calculating a ranking score for each of the samples in the set based at least on an uncertainty for a corresponding prediction for a label, selecting a subset of the samples that have more than a threshold ranking score, and submitting the subset to a client for replacement labels. The method also includes receiving the replacement labels from the client, and training the machine learning model, using the subset of the samples as training data, wherein labels predicted by the machine learning model for the subset are replaced with corresponding replacement labels from the client.

In another embodiment, the method further includes identifying a first period of time for performing an epoch of training on the machine learning model, identifying a second period of time for a client to generate a replacement label for a sample, and dynamically selecting a number of the samples to include in the subset, by dividing the first period of time by the second period of time to determine an expected number of the samples that the client is capable of generating replacement labels for during the epoch.

In another embodiment, the client comprises one of multiple clients, and the method further includes modifying the number of the samples to include in the subset, based on a number of the multiple clients.

In another embodiment, the method further includes dynamically providing a next sample in the subset, that has not yet received a replacement label, to the client in response to receiving a replacement label from the client for a prior sample.

A further embodiment is a non-transitory computer readable medium embodying programmed instructions executed by a processor, wherein the instructions direct the processor to implement a method for training a machine learning model. The method includes storing the machine learning model, utilizing training data to train the machine learning model across multiple epochs, preparing additional training data between epochs by selecting a set of samples that are unclassified, operating the machine learning model to predict labels that classify the samples, determining an uncertainty of the labels predicted by the machine learning model, calculating a ranking score for each of the samples in the set based at least on an uncertainty for a corresponding prediction for a label, selecting a subset of the samples that have more than a threshold ranking score, and submitting the subset to a client for replacement labels. The method also includes receiving the replacement labels from the client, and training the machine learning model, using the subset of the samples as training data, wherein labels predicted by the machine learning model for the subset are replaced with corresponding replacement labels from the client.

Other embodiments may include computer readable media, other systems, or other methods as described below.

The above summary provides a basic understanding of some aspects of the specification. This summary is not an extensive overview of the specification. It is intended to neither identify key or critical elements of the specification nor delineate any scope of the particular embodiments of the specification, or any scope of the claims. Its sole purpose is to present some concepts of the specification in a simplified form as a prelude to the more detailed description that is presented later.

### Description of the Drawings

Some embodiments of the invention are now described, by way of example only, and with reference to the accompanying drawings. The same reference number represents the same element or the same type of element on all drawings.
FIG. 1 is a block diagram of a system for intelligently preparing training data for use by a machine learning model in an illustrative embodiment.
FIG. 2 illustrates a method for intelligently preparing training data for use by a machine learning model in an illustrative embodiment.
FIG. 3 is a block diagram of a further system for intelligently preparing training data for use by a machine learning model in an illustrative embodiment.
FIG. 4 illustrates a further method for intelligently preparing training data for use by a machine learning model in an illustrative embodiment.
FIG. 5 is a block diagram depicting functional components of a controller for the system of FIG. 3 in an illustrative embodiment.
FIG. 6 is a block diagram depicting a communication flow between a controller and a labeling client in an illustrative embodiment.
FIG. 7 is a message diagram illustrating training of a machine learning model in an environment with multiple labeling clients in an illustrative embodiment.
FIG. 8 depicts a Graphical User Interface (GUI) for labeling a sample in the form of an image in an illustrative embodiment.
FIG. 9 depicts a GUI for tracking changes in performance for a machine learning model over time in an illustrative embodiment.

### Description of Embodiments

The figures and the following description illustrate specific exemplary embodiments. It will thus be appreciated that those skilled in the art will be able to devise various arrangements that, although not explicitly described or shown herein, embody the principles of the embodiments and are included within the scope of the embodiments. Furthermore, any examples described herein are intended to aid in understanding the principles of the embodiments, and are to be construed as being without limitation to such specifically recited examples and conditions. As a result, the inventive concept(s) is not limited to the specific embodiments or examples described below, but by the claims and their equivalents.

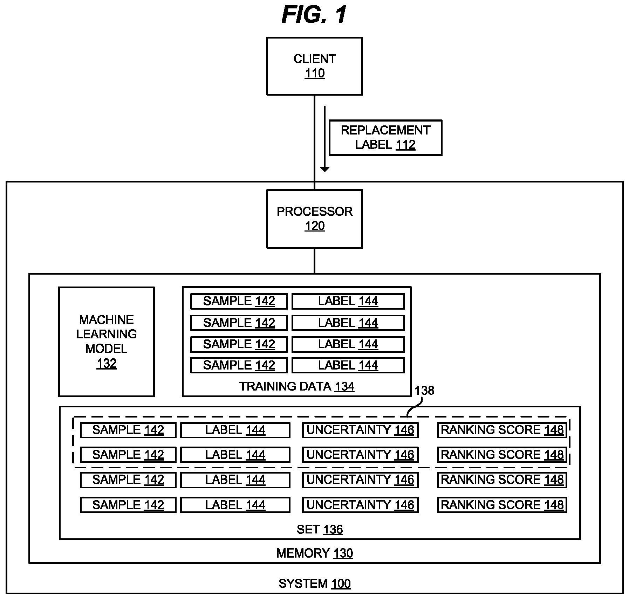

FIG. 1 is a block diagram of a system 100 for intelligently preparing training data for use by a machine learning model in an illustrative embodiment. System 100 is a computer-implemented architecture for training one or more machine learning models 132, using training data 134 stored in memory 130. Specifically, system 100 engages in an active learning process to intelligently select samples 142 for receiving replacement labels from a client 110, and may further determine a number of samples 142 to label during each epoch of training for the machine learning model 132.

The machine learning model 132 trained by system 100 may comprise a neural network such as a DNN, a regression model such as a linear regression model, or any other suitable intelligent model capable of being trained to alter its output after undergoing one or more epochs of training. Training for a machine learning model 132 may comprise, for example, applying samples 142 as inputs to the machine learning model 132, determining an output of the machine learning model 132 (e.g., in the form of a prediction for a label 144), comparing the output of the machine learning model 132 to an expected output (e.g., a label known with certainty to apply to the sample 142), determining a cost of the output of the machine learning model 132 according to a cost function, and adjusting weights at the machine learning model 132 (e.g., weights applied as coefficients to individual nodes of a neural network, or individual variables of a regression model) based on the determined cost. In some embodiments, the machine learning model 132 has already been pretrained as (e.g., as specified by a user) and undergoes additional training via system 100.

The samples 142 used during training of the machine learning model 132 may comprise raw data, such as images, text, audio, or video content. Alternatively, the samples 142 may comprise featurized data, comprising raw data that has been processed into a vector of values suitable for processing by the machine learning model 132.

In order to support the training process above, processor 120 identifies labels 144 predicted for a set 136 of samples 142 in memory 130 by the machine learning model 132. Depending on the embodiment, the set 136 may comprise thousands or millions of samples 142. The processor 120 additionally assigns ranking scores 148 to the samples 142 of the set 136, and selects a subset 138 of the samples 142 for receiving replacement labels 144 from client 110, based on the uncertainty of each label 144 that was predicted by the machine learning model 132. The client 110 generates replacement labels 112 for the samples 142, and the samples 142 are then utilized as training data 134 for a next epoch of training for the machine learning model 132.

Simply put, the system 100 of FIG. 1 instructs a client 110 to apply replacement labels 112 to samples 142 that have been selectively chosen. By carefully choosing a subset 138 of the samples 142 for re-labeling, system 100 ensures that replacement labels 112 are applied in circumstances where the re-labeling will provide substantial aid in training the machine learning model 132. For example, system 100 may choose a subset 138 comprising samples 142 having predictions for labels 144 with the highest amount of uncertainty. By replacing the predictions for labels 144 for these samples 142 with corresponding replacement labels 112, the uncertainty related to these samples 142 may be eliminated. In further embodiments, the system 100 is capable of utilizing an already-labeled training set (e.g., provided by a user) for initial training of the machine learning model 132. Thus, initial training of the machine learning model 132 need not require the replacement labels discussed above.

In this embodiment, samples 142 are provided a ranking score 148 by processor 120. The ranking score 148 is based on a measure like uncertainty for corresponding predictions for labels 144 generated by the machine learning model 132. This measure may be determined by processor 120 as a score via at least one technique of entropy calculation, similarity of samples determination, distance of samples calculation, or model uncertainty calculation.

In one embodiment, a ranking score 148 may be implemented as a numerical ranking of the samples 142 from greatest uncertainty to least uncertainty for a label 144 that was predicted. In one embodiment, the samples 142 may be predicted as having multiple labels 144 at once, and the ranking score 148 is determined based on an aggregate uncertainty (e.g., a maximum, minimum, or average (e.g., mean) uncertainty) across all predictions for labels 144 for a sample 142. That is, an embodiment where samples 142 comprise images, processor 120 may determine a score for each object depicted within a sample 142, and aggregate the scores for the objects within the sample 142 to determine the ranking score 148 as a mean uncertainty, a minimum uncertainty, or a maximum uncertainty.

In one embodiment, training is initiated by processor 120 in response to a request. The request may define permitted classes for a label, may include a pointer to the set 136 of the samples 142, and may define an end condition for halting training of the machine learning model 132 and halting labeling of the samples 142. In many instances, each of the labels 144 is selected from a set of predefined classes. For example, for a label relating to "domestic animal type," predefined classes may comprise "dog," "cat," "rabbit," and "mouse." An end condition may be defined as a budget of replacement labels 112 that are permitted over the entire training period (e.g., across all epochs of training) for the machine learning model 132, a time limit, or other metric.

System 100 provides a notable technical benefit over prior techniques, because labeled data remains both highly desired and scarce for data analysis and prediction systems that employ supervised learning. By intelligently selecting samples for labeling (also known as "annotation"), system 100 reduces the number of human-labeled samples needed for training, while still providing enough reference data for supervised learning techniques to thrive (e.g., for achieving a targeted classification performance).

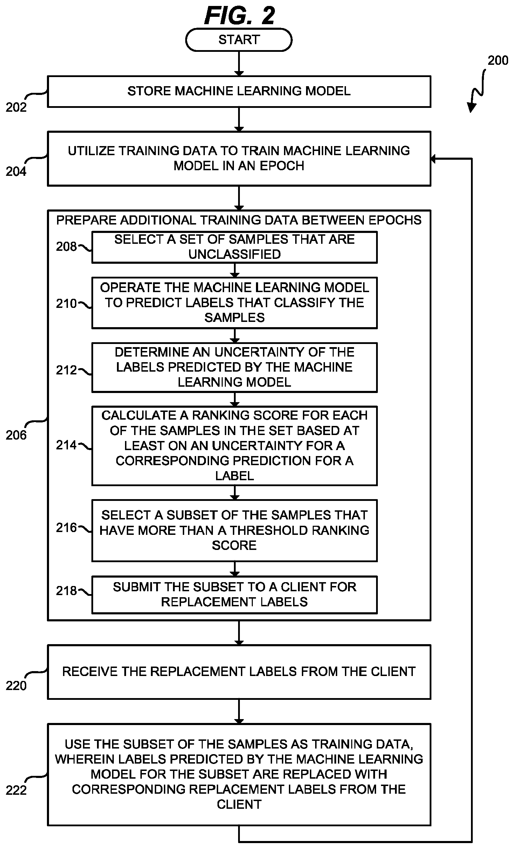

Illustrative details of the operation of system 100 will be discussed with regard to FIG. 2. Assume, for this embodiment, that a request has been received to train a machine learning model. In response to receiving the request, processor 120 acquires a set 136 of samples 142 from storage in memory 130 for training the machine learning model 132.

FIG. 2 illustrates a method 200 for intelligently preparing training data for use by a machine learning model in an illustrative embodiment. The steps of method 200 will be described with reference to system 100 in FIG. 1, but those skilled in the art will appreciate that method 200 may be performed in other systems. The steps of the flow charts described herein are not all inclusive and may include other steps not shown, and the steps may be performed in an alternative order.

Step 202 comprises processor 120 storing the machine learning model 132 in memory 130. In one embodiment, this comprises allocating space in memory 130 for storing the machine learning model 132, as well as operating and initializing the machine learning model 132.

Step 204 comprises processor 120 utilizing training data 134 to train the machine learning model 132 across multiple epochs. An epoch may comprise a period of time during which the machine learning model 132 processes all samples 142 currently present in the training data 134. At the end of (or during) each epoch, weights for the machine learning model 132 are adjusted to enhance prediction quality. This may comprise using labels 144 predicted by the machine learning model 132 for samples 142 of training data as input to a cost function. If the labels 144 predicted by the machine learning model 132 are inaccurate, then weights may be adjusted for the machine learning model 132 during training to enhance the performance of the machine learning model 132.

Step 206 comprises processor 120 preparing additional training data between epochs. Specifically, step 206 comprises intelligently selecting samples 142 for receiving replacement labels 112 from a client 110, in order to enhance the accuracy of training data that will be used for machine learning model 132. Step 206 includes steps 208-218 performed by processor 120.

Step 208 comprises an optional step of selecting a set 136 of samples 142 that are unclassified. This step may be particularly beneficial in reducing the number of samples for which predictions are later made by a machine learning model (e.g., in step 210). For example, step 208 may be performed in order to reduce the complexity of processing operations if a large number of unclassified samples already exists. In some embodiments, step 208 is skipped entirely. Hence, predictions and uncertainty scores may be generated for all available samples, including those that already have a label/annotation applied. That is, it may be advantageous know uncertainty scores for already annotated samples, as this may facilitate a determination as to whether to re-label samples.

Step 208 may comprise selecting additional samples 142 that have not yet been labeled or used as training data 134 for the machine learning model 132. The selection may be performed by any suitable criteria, such as randomly, based on metrics relating to sample quality, based on the date of samples, etc.

Depending on the type of labels 144 being applied and the underlying processing performed by the machine learning model 132, samples 142 may comprise images, audio, text, video, or other pieces of raw data. Alternatively, samples 142 may comprise featurized data for use by the machine learning model 132, generated from raw data. For example, featurized data may comprise raw data that has been processed into a vector of inputs for use by the machine learning model 132.

Step 210 comprises operating the machine learning model 132 to predict labels 144 that classify the samples 142, and may be performed on samples 142 not already labeled by client 110, or on samples pre-selected by step 208, or always on all samples 142 as desired. In this process, the samples 142 are applied as inputs to the machine learning model 132, and the machine learning model 132 predicts labels 144 that classify the samples 142 as output. In some embodiments, the machine learning model 132 also outputs an uncertainty associated with each predictions for a label 144 that was generated.

Step 212 comprises determining an uncertainty 146 of the labels 144 predicted by the machine learning model 132. In embodiments where the uncertainties or confidence values are already determined by the machine learning model 132 for predictions for the labels 144, this data may be used in step 212. Alternatively, processor 120 may perform calculations to determine the uncertainty of each prediction for a label 144, or to determine another measure that represents the usefulness or need per sample to be labeled.

Step 214 comprises calculating a ranking score 148 for each of the samples 142 in the set 136 based at least on an uncertainty 146 for a prediction for a label 144 that is corresponding. In one embodiment, a ranking score 148 comprises a numerical value corresponding with an amount of uncertainty for a prediction for a label 144. The ranking scores 148 may then be used by processor 120 to sort the predictions for the labels 144 into a ranked list.

Step 216 comprises selecting a subset 138 of the samples 142 that have more than a threshold amount of ranking score 148. In one embodiment, processor 120 selects a subset 138 of the samples 142 having predictions for the labels 144 with the highest uncertainty (e.g., as indicated by rank). In one embodiment, the processor 120 includes a predefined number of samples having a highest amount of uncertainty within the subset 138. That is, the subset 138 includes a predefined number of samples 142, which are selected in order of rank.

Step 218 comprises submitting the subset 138 to a client 110 for replacement labels 112. This may comprise maintaining a buffer in memory 130 with pointers to the samples 142 and corresponding labels 144, and then transmitting the pointers one-by-one to the client 110. A next pointer may then be transmitted to the client 110 after receiving a replacement label 112, iteratively until all samples 142 in the subset 138 have been processed.

At the client 110, an enhanced processing operation, or a human operator, reviews the sample 142 and applies one or more replacement labels 112 to the sample 142. In many embodiments, the replacement labels 112 can be seen as ground-truth labels having high certainty. As such, replacing the labels 144 predicted by the machine learning model 132 with the replacement labels 112 helps the machine learning model 132 to converge during training, because it eliminates the uncertainty associated with the samples 142 that previously had the most uncertain predictions for their labels 144.

Step 220 comprises receiving the replacement labels 112 from the client 110. These replacement labels 112 may be received serially, or in batches, depending on the process of communication between the processor 120 and the client 110. In one embodiment, controller 320 receives the replacement labels 112 from the client 110 while performing training of the machine learning model 132 during an epoch. The replacement labels 112 from the client 110 which were provided during the epoch are then used for training data 134 for a next epoch.

As steps 206 and 220 proceed, processor 120 may perform training of the machine learning model 132 in another epoch of training. Hence, steps 218 and 220 may be performed in parallel with training step 204 for the machine learning model 132. Specifically, the machine learning model 132 may be trained for a current set 136 of samples 142 while replacement labels 112 are being generated for a next set of samples 142.

Step 222 uses/selects the subset 138 of the samples 142 as training data 134. As a part of this process, labels 144 predicted by the machine learning model 132 for the subset 138 are replaced with corresponding replacement labels 112 from the client 110. The subset 138 of the samples 142 may replace prior training data for the machine learning model 132. Alternatively, processor 120 may supplement prior, already labeled training data for the machine learning model 132 with the subset 138 of the samples 142, and the entirety comprising the subset and the prior training data may then be utilized as a whole training set for the machine learning model 132. In either case, labels 144 predicted by the machine learning model 132 for the subset 138 are replaced with corresponding replacement labels 112 from the client 110. Processor 120 may then train the machine learning model 132 with the resulting training data 134 in step 204. For example, the supplemented or replacement training data is then used in step 204 for a next epoch of training for the machine learning model 132.

Processor 120 may further decide to halt training of the machine learning model 132 (e.g., upon completion of an epoch), based on a classification performance score (e.g., accuracy, an Fl score, a precision recall, etc.) of the machine learning model, or when a stagnation of the classification performance score over epochs is seen. That is, if the machine learning model 132 has reached a desired level of performance, processor 120 may halt further training in order to save time, cost, and processing resources.

Method 200 provides a technical benefit by utilizing enhanced labeling (e.g., human labeling, or labeling by instructions in an advanced segment of code) on samples 142 having predictions for labels 144 with the most uncertainty. This means that enhanced labeling, which may be expensive or time consuming, is performed when that enhanced labeling will provide the greatest amount of performance improvement for the machine learning model 132 during training.

In a further embodiment, processor 120 automatically determines a number of samples 142 to include in the subset 138. This determination is performed by identifying a first period of time for performing an epoch of training on the machine learning model 132, and identifying a second period of time for a client 110 to generate a replacement label 112 for a sample 142. The processor 120 then dynamically selects a number of the samples 142 to include in the subset 138 by dividing the first period of time by the second period of time, to determine an expected number of the samples 142 that the client 110 is capable of generating replacement labels 112 for during the epoch. This process enables the generation of replacement labels 112 to be performed concurrently with an epoch of training, without delaying further epochs of training.

In a further embodiment, the client 110 comprises one of multiple clients 110, and the processor 120 modifies the number of the samples 142 to include in the subset 138, based on a number of the multiple clients 110. For example, the processor 120 may multiply the number of samples 142 to include in the subset 138 for a single client 110 by the number of clients 110. In this manner, each of the multiple clients 110, by each processing a different portion of the subset 138, performs replacement labeling for a fraction of the subset 138 concurrently with an epoch of training.

In yet another embodiment, processor 120 dynamically provides next samples 142 in the subset 138 to the client 110, in response to receiving one or more replacement labels 112 from the client 110 for a prior sample 142. In a multi-client environment, processor 120 may further store tracking logic indicating which client samples 142 have been sent to for replacement labels 112. This data may be flushed at the end of each epoch of training.

In a still further embodiment, processor 120 submits the subset 138 to the client 110 by adding the samples 142 from the subset 138 to a buffer in memory 130. As each sample 142 in the buffer receives a replacement label 112, the processor 120 submits a next sample from the buffer to the client 110. Then, the processor 120 flushes the buffer in response to the machine learning model 132 completing an epoch of training.

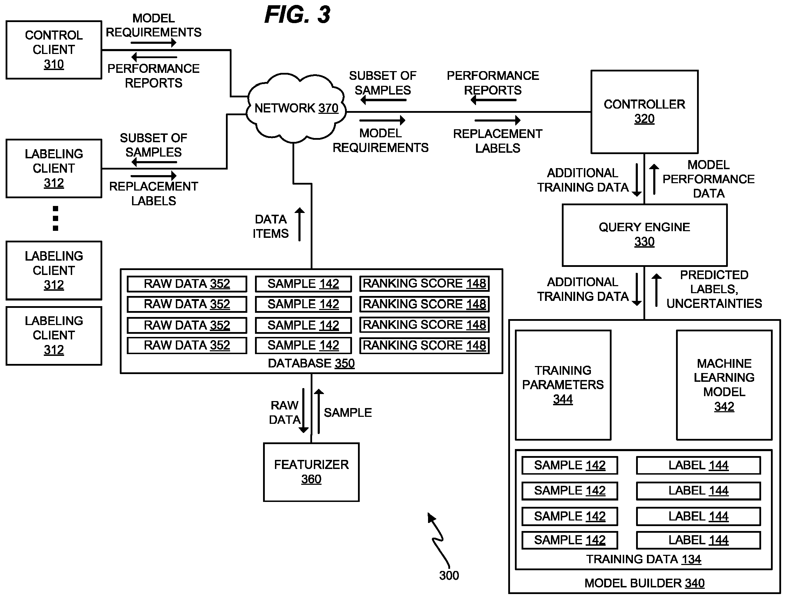

FIG. 3 is a block diagram of a further system 300 for intelligently preparing training data for use by a machine learning model in an illustrative embodiment. Any of the various components discussed with regard to system 300 may be implemented by a processor and/or a memory (e.g., as shown in FIG. 1) in order to perform desired operations.

In this embodiment, processing is initiated by a control client 310, which generates a request to train a machine learning model 342. The request may indicate a type of machine learning model to train (such as a DNN), and may additionally use a pointer to indicate a location of raw data 352 at database 350 for use in training the machine learning model 342. The request may further include a budget, such as a number of allowed annotations, or a time period for training. The request is sent via network 370 (such as the Internet or a private network) to controller 320.

Controller 320 manages the overall operations of the system 300. In one embodiment, the controller 320 manages the annotation process by starting and stopping the processes of other components in the system 300. Controller 320 may further manage the training process for a machine learning model by responding to requests coming from the control client 310 and/or labeling clients 312.

The database 350 used by controller 320 may include samples 142 in the form of featurized data, such as a Two Dimensional (2D) data table holding feature data, wherein rows represent individual samples 142, and columns represent features of the samples. The 2D data table may be supplemented by an index column to reduce processing load. In this embodiment, the database 350 also includes labels 144 in the form of a 2D data table. Within the 2D data table, available labels 144 are provided in columns. The 2D data table for the labels 144 is supported by an index column for efficient retrieval of data. In one embodiment, the labels 144 are supported by multiple object data columns. Items within an object data column may include a polygon definition and an object label class, as desired.

In this embodiment, database 350 also includes raw data 352 (also known as "source data"). The raw data 352 may be stored in columns of a 2D data table, and an index column may be used to enhance processing efficiency. In one embodiment, an additional column is used to hold image objects (e.g., bitmap picture data), or filenames for the image objects.

In this embodiment, the controller 320 also identifies samples 142 in the database 350 that were indicated in the request from the control client 310, and instructs featurizer 360 to generate featurized versions of raw data 352, for use as samples 142 for submission to a machine learning model 342. In this embodiment, the featurizer 360 is designed to receive raw data 352 and transform the raw data 352 into a new representation which is directly applicable as input to q machine learning model 342. For example, the featurizer 360 may perform dimensionality reduction methods such as random projection, Multidimensional Scaling (MDS) etc. In particular, the featurizer 360 may also use representations derived from a response of neural networks layers to the raw data 352 for a sample 142. Data output from the featurizer 360 is stored in the database 350 as samples 142 in this embodiment.

The controller 320 further instructs query engine 330 to cause a model builder 340 to initialize a machine learning model 342 according to training parameters 344 defined in the request from the control client 310. In one embodiment, the query engine 330 receives a current version of a machine learning model 342 (e.g., as provided by control client 310) as input. Depending on embodiment, query engine 330 may also receive training data.

The model builder 340 includes code for training the machine learning model 342, such as code for feature pre-processing and controlling training parameters 344. The training parameters 344 used by the model builder 340 are configurable. For example, some training parameters 344 may dictate which pre-processing steps (if any) should be executed, which machine learning algorithm to use, etc. In this embodiment, the model builder 340 outputs confidence and/or probability values for labels 144 predicted by the machine learning model 342 for samples during an epoch of training. The model builder 340 further outputs model performance statistics (e.g., accuracy, confidence, etc.) obtained by cross-validation and independent testing, depending on configuration. In one embodiment, the model builder 340 further includes a model application module that applies a trained machine learning model 342 to samples 142 and returns confidence and/or probability values for the resulting labels that were generated.

In a further embodiment, the model builder 340 performs feature selection, which increases model performance and reduces the feature set considered by the machine learning model 342 for prediction. When feature selection is enabled, the model builder 340 outputs the selected feature set to controller 320. This information can be used by controller 320 when determining the next samples to be annotated via labeling clients 312.

During training, the query engine 330 may utilize a current version of the machine learning model 342 to decide which samples 142 are most likely to benefit from new annotations. The query engine 330 may provide this information as a ranked list of sample IDs (or entire samples) for receiving replacement labels. For example, query engine 330 may rank labels 144 by uncertainty, and may provide the locations of corresponding samples 142 to controller 320. Controller 320 then generates requests to annotate a subset of the samples 142 having the most uncertainty. These requests are sent to one or more labeling clients 312.

The labeling clients 312 retrieve the samples 142 (or corresponding raw data) from database 350, and generate replacement labels. For example, replacement labels may be generated by an operator of a labeling client 312, utilizing a GUI for annotating a sample 142. The replacement labels are then utilized, together with the subset of the samples 142, as training data 134 for the machine learning model 342. In one embodiment, the labeling client 312 comprises a GUI for human annotators, running as a web client in a web browser. The labeling client 312 may load and display images to be annotated, and may further include elements to facilitate the application of labels to samples. Replacement labels may be determined for an entire sample 142 (e.g., image), or for portions of the sample 142. For samples comprising images, the portions may be set by the user in graphical manner, such as via display on another layer of the image if desired. Once the user has confirmed that all labels have been applied, the labels may be sent onward to controller 320 for use in training.

Output from the system 300 may comprise inference results (e.g., labels) predicted by the machine learning model 342. This data may be formatted as a 2D table, wherein, columns provide labels, predictions, and confidence values for specific samples. The system 300 may also provide the machine learning model 342 itself to control client 310, for use in an operational environment once training has been completed. The machine learning model 342 may then operate as a trained classifier to classify additional data in a working environment.

Further outputs from the system 300 may comprise executable code (e.g., Python code) describing data pre-processing performed on raw data 352, and parameters used for training the machine learning model 342. The executable code allows the machine learning model 342 to be applied to future feature data having the same structure as the training data that was originally used for the machine learning model 342. The executable code may be stored, for example, in database 350 and associated with a unique identifier for the machine learning model 342.

During processing, such as at the end of each epoch of training, controller 320 may further generate a GUI for tracking the performance and/or budget used during training of the machine learning model 342. Further details of these operations will be discussed with regard to the FIGS. below. In other embodiments, performance data for a machine learning model may be provided by controller 320 in a report file (e.g., a Portable Document Format (PDF) file) listing performance figures, such as an achieved active learning gain and classifier performance. The report file may also include a listing of used features, an algorithm for the machine learning model, and related parameters.

In a further embodiment, the controller 320 instructs the model builder 340 to activate a model-optimization routine (e.g., a hyperparameter search, feature processing (such as feature selection), etc.) for the machine learning model 342 in response to determining that a change in performance of the machine learning model 342 across epochs is less than a threshold amount. By altering the training process in this manner, controller 320 potentially unlocks additional performance benefits from training the machine learning model 342.

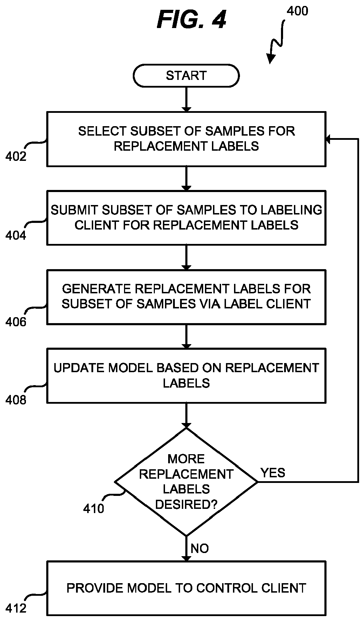

FIG. 4 illustrates a further method 400 for intelligently preparing training data for use by a machine learning model in an illustrative embodiment. Method 400 may be performed, for example, when a currently achievable performance of a machine learning model 342 does not meet model performance requirements provided by a control client 310. In such circumstances, the query engine 330 may be called to provide sample IDs indicating sample(s) to be labeled next. Method 400 may be iterated until an end condition has been met, or until all training data samples have been labeled.

Step 402 includes query engine 330 selecting a subset of samples 142 for replacement labels. This may be performed by selecting a predefined amount or number of samples 142 having a greatest amount of uncertainty.

Step 404 includes controller 320 submitting the subset of samples 142 to one or more labeling clients 312 for replacement labels. This may comprise submitting the samples 142, individually or in batches, to labeling clients 312 that are corresponding, awaiting replacement labels, and then sending additional samples to the labeling clients 312. In one embodiment, samples to be labeled are indicated by the controller 320 to the labeling clients 312. For example, the controller 320 may utilize a web interface that enables labeling clients 312 to request information about samples 142 to be labeled next.

In one embodiment, controller 320 generates and tracks labeling tasks for performance. A labeling task may be initiated by a control client 310 by submitting an annotation order sheet (e.g., a data table available in a database) to the controller 320. The annotation order sheet holds all parameters for labeling, as well as conditions for concluding a labeling task. These conditions may indicate, for example, an annotation budget or performance requirements. Examples of content within an annotation order sheet include: a unique identifier for a labeling task; a primary key for samples, raw data and featurized data; a pointer to a data table holding the featurized data; a pointer to data table holding source data (e.g. images); a pointer for a labeling client 312 to download images for human labeling; a maximum number of samples 142 to be labeled via labeling clients 312; a model performance target score to be achieved; a label definition for the sample 142 or a label for a portion of the sample 142; and/or a name/classification for the label, a label type, a list of label classes, and list of object classes.

For each labeling task, the controller 320 may create a Uniform Resource Locator (URL) to which the labeling clients 312 can send requests. The controller 320 may then collect replacement labels from the labeling clients 312 for use in training the machine learning model 342.

In one embodiment, the controller 320 maintains a data table in database 350 (or an internal database) that includes status and process information for labeling tasks that are currently in-process or finished. In the event that training for machine learning model 342 is re-started, the controller 320 may continue to direct previously running labeling tasks, in order to ensure the robust collection of replacement labels for training data.

In a further embodiment, if labels 144 have already been provided for a substantial fraction (e.g., more than fifty percent) of the samples 142, the controller 320 may perform stepwise provisioning of labeled samples without involving the labeling clients 312, for performance evaluation purposes. Furthermore, controller 320 may test varying algorithms for query engine 330 and/or machine learning model 342, in relation to specific labeling tasks. The results may be utilized to gather statistics indicating which algorithms provide the best performance for specific types of labeling and classification problems. The controller 320 may further report the status of ongoing labeling tasks sent to control clients 310.

Step 406 includes generating replacement labels for the subset of samples via the one or more labeling clients 312. This may be performed by an operator of a labeling client 312 utilizing a GUI to review the samples 142 and select labels 144 for the samples 142 that classify the samples 142.

Step 408 comprises updating a machine learning model based on the replacement labels. This may comprise adjusting weights at the machine learning model based on output from a cost function, as discussed above.

Step 410 comprises determining whether more replacement labels are desired. If so, processing returns to step 402. If not, processing advances to step 412, where the machine learning model 342 is provided to a control client 310. Determining whether more replacement labels are desired may be performed, for example, by determining whether an end condition has been met or not.

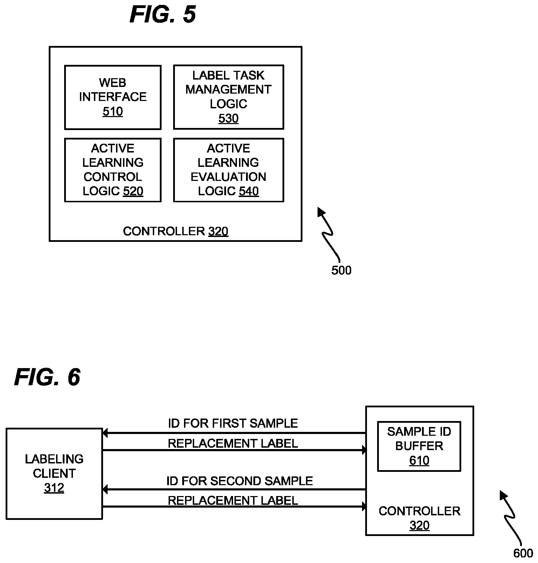

FIG. 5 is a block diagram 500 depicting functional components of a controller 320 for the system of FIG. 3 in an illustrative embodiment. In this embodiment, the controller 320 includes components, implemented by a processor and memory, for a web interface 510, active learning control logic 520, label task management logic 530, and active learning evaluation logic 540.

The web interface 510 provides a frontend for interacting with labeling clients 312, and enables labeling tasks to be presented in a format which can be viewed via a web browser. The active learning control logic 520 interacts with query engine 330 to manage selection of additional samples for training. The label task management logic 530 engages in the generation and tracking of labeling tasks sent to labeling clients 312. Meanwhile, the active learning evaluation logic 540 tracks changes in performance of a machine learning model 342 over time. These changes in performance may be presented to an operator of control client 310, in order to track convergence of the machine learning model 342 during training.

FIG. 6 is a block diagram 600 depicting a communication flow between a controller and a labeling client in an illustrative embodiment. In this embodiment, controller 320 transmits an identifier (ID) for a first sample 142 from a sample ID buffer 610, and labeling client 312 responds with a replacement label for that sample 142. The controller 320 then sends a next ID for a second sample 142, and the labeling client 312 responds with a next replacement label. In a further embodiment, controller 320 may directly send raw data for a sample 142, for use by a labeling client 312.

As a part of the process of generating replacement labels, a labeling client 312 may request another sample 142. The controller 320 responds with an identifier for a sample 142 that comes next. After a replacement label has been generated at the labeling client 312, the labeling information (e.g., the classes chosen for labels 144, and/or the locations of labels at the sample 142) are provided to controller 320. The controller 320 may then store the labels in memory for use in training. If no samples 142 remain for the current task, then controller 320 may respond with finalization information (e.g., an instruction concluding the task). The labeling client 312 then updates its GUI to indicate to the user that the task has been completed.

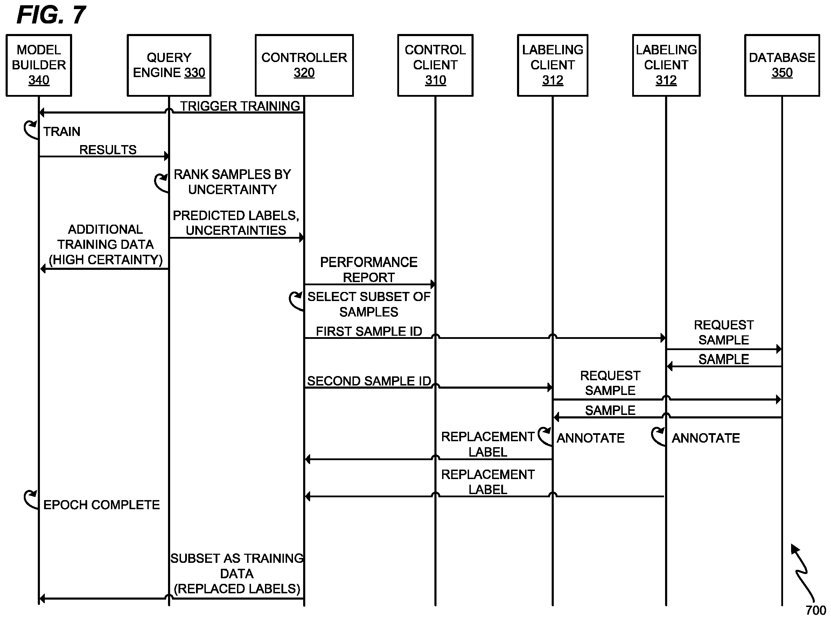

FIG. 7 is a message diagram 700 illustrating training of a machine learning model in an environment with multiple labeling clients in an illustrative embodiment. According to message diagram 700, controller 320 sends an instruction to model builder 340 to trigger training of a machine learning model. Model builder 340 initiates training of the machine learning model, and provides results to query engine 330. Query engine 330 provides, for each sample in a subset, one or more labels and uncertainties. In this embodiment, query engine 330 additionally ranks the samples according to uncertainty, or any other measure that represents the usefulness for being labeled next. Samples having high certainty are sent back to model builder 340 for use as training data. Query engine 330 may additionally forward these samples, uncertainties, and/or rankings to controller 320. If no labels are available for the samples at the beginning of training, query engine 330 may start with a randomly selected subset of samples to be forwarded to the clients.

Controller 320 prepares a performance report indicating a performance of the machine learning model. The performance report is sent to control client 310.

Controller 320 additionally selects a subset of samples for receiving replacement labels. The controller 320 transmits a labeling task, including an ID for a first sample in the subset, to a first labeling client 312. The controller also transmits a labeling task, including an ID for a second sample in the subset, to a second labeling client 312. The labeling clients 312 retrieve the requested samples from database 350, and perform labeling/annotation for the requested samples that classify the contents of the samples.

The replacement labels are sent to controller 320, which may send additional labeling tasks until the entire subset of samples has received replacement labels. At some point in time, model builder 340 reports that an epoch of training has been completed for the machine learning model 342. Controller 320 then sends the subset of samples, including the replacement labels, to model builder 340 for use as training data to supplement or replace the existing training data.

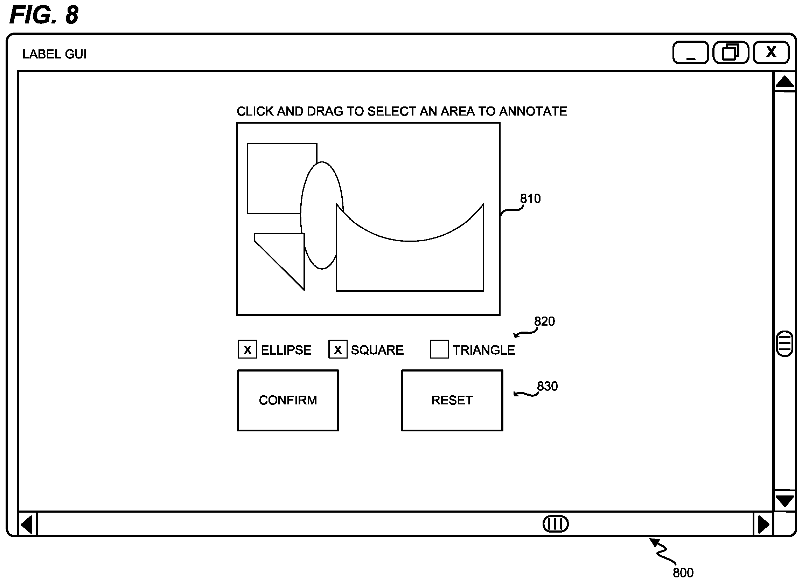

FIG. 8 depicts a Graphical User Interface (GUI) 800 for labeling a sample in the form of an image in an illustrative embodiment. In this embodiment, the GUI 800 is implemented by a labeling client 312, and includes a presentation area 810 for depicting raw data for a sample (e.g., an image). A user may then apply or remove labels via elements 820 (e.g., checkboxes, or a textual data entry field). Finally, confirmation area 830 enables a user to confirm their choices, or reset their choices. Upon confirmation from the user, the labeling client 312 transmits the list of labels, along with an ID for the sample, to a controller 320.

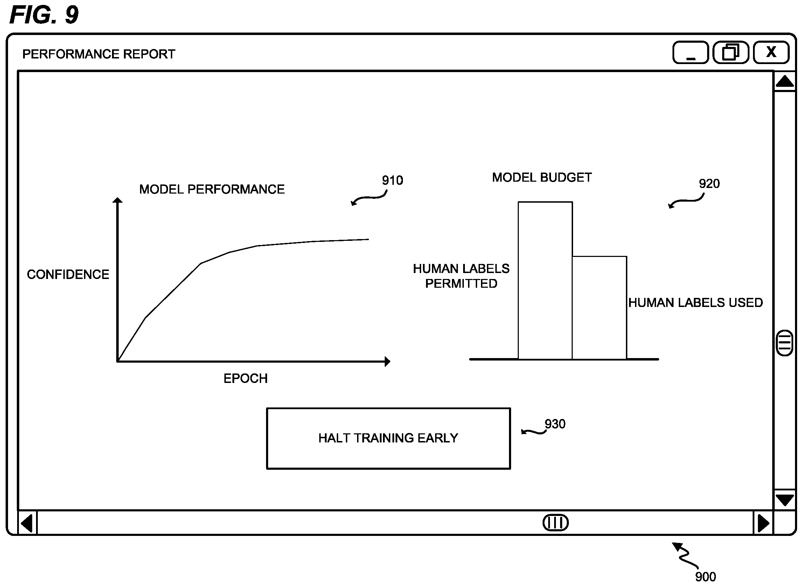

FIG. 9 depicts a GUI 900 for tracking changes in performance for a machine learning model over time in an illustrative embodiment. In this embodiment, the GUI 900 is implemented by a control client 310, and includes a model performance graph 910 depicting changes in average classification performance and/or confidence (or minimum confidence) for a machine learning model 342 over a period of time. That is, changes in performance and/or confidence over each epoch are presented via an intuitive graph. The GUI 900 also includes a graph 920 depicting a budget for training the machine learning model. In this embodiment, the budget comprises a number of enhanced (e.g., human-sourced) annotations that are allowed. By presenting both budgetary and performance data to a user, the user has information that is of value when deciding whether to terminate the training process early. For example, if the performance of a model is not increasing by more than a predefined amount (e.g., five percent certainty) across epochs, or a large portion of the budget has already been spent, a user may interact with an element 930 for halting training early if desired. This saves both cost and time that might otherwise be wasted on further training for the machine learning model.

Any of the various elements or modules shown in the figures or described herein may be implemented as hardware, software, firmware, or some combination of these. For example, an element may be implemented as dedicated hardware. Dedicated hardware elements may be referred to as "processors", "controllers", or some similar terminology. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, a network processor, application specific integrated circuit (ASIC) or other circuitry, field programmable gate array (FPGA), read only memory (ROM) for storing software, random access memory (RAM), non-volatile storage, logic, or some other physical hardware component or module.

Also, an element may be implemented as instructions executable by a processor or a computer to perform the functions of the element. Some examples of instructions are software, program code, and firmware. The instructions are operational when executed by the processor to direct the processor to perform the functions of the element. The instructions may be stored on storage devices that are readable by the processor. Some examples of the storage devices are digital or solid-state memories, magnetic storage media such as a magnetic disks and magnetic tapes, hard drives, or optically readable digital data storage media.

As used in this application, the term "circuitry" may refer to one or more or all of the following:
(a) hardware-only circuit implementations (such as implementations in only analog and/or digital circuitry);
(b) combinations of hardware circuits and software, such as (as applicable):
   (i) a combination of analog and/or digital hardware circuit(s) with software/firmware; and
   (ii) any portions of hardware processor(s) with software (including digital signal processor(s)), software, and memory(ies) that work together to cause an apparatus, such as a mobile phone or server, to perform various functions); and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Although specific embodiments were described herein, the scope of the disclosure is not limited to those specific embodiments. The scope of the disclosure is defined by the following claims and any equivalents thereof.

## Claims

1. A system for training a machine learning model, the system comprising:
at least one processor; and
at least one memory including computer program code;
the at least one memory and the computer program code configured to, with the at least one processor, cause the system at least to:
store the machine learning model; and
utilize training data to train the machine learning model across multiple epochs;
the at least one memory and the computer program code is further configured to, with the at least one processor, cause the system at least to:
prepare additional training data between the epochs by: selecting a set of samples that are unclassified, operating the machine learning model to predict labels that classify the samples, determining an uncertainty of the labels predicted by the machine learning model, calculating a ranking score for each of the samples in the set based at least on an uncertainty for a corresponding prediction for a label, selecting a subset of the samples that have more than a threshold ranking score, and submitting the subset to a client for replacement labels;
the at least one memory and the computer program code is further configured to, with the at least one processor, cause the system at least to:
receive the replacement labels from the client; and
train the machine learning model, using the subset of the samples as the training data, wherein the labels predicted by the machine learning model for the subset are replaced with corresponding replacement labels from the client.

2. The system of claim 1 wherein:
the at least one memory and the computer program code is further configured to, with the at least one processor, cause the system at least to:
identify a first period of time for performing an epoch of training on the machine learning model;
identify a second period of time for a client to generate a replacement label for a sample; and
dynamically select a number of the samples to include in the subset, by dividing the first period of time by the second period of time to determine an expected number of the samples that the client is capable of generating replacement labels for during the epoch.

3. The system of claim 2 wherein:
the client comprises one of multiple clients, and
the at least one memory and the computer program code is further configured to, with the at least one processor, cause the system at least to:
modify the number of the samples to include in the subset, based on a number of the multiple clients.

4. The system of claim 1 wherein:
the at least one memory and the computer program code is further configured to, with the at least one processor, cause the system at least to:
dynamically provide a next sample in the subset, that has not yet received a replacement label, to the client in response to receiving a replacement label from the client for a prior sample.

5. The system of claim 1 wherein:
the at least one memory and the computer program code is further configured to, with the at least one processor, cause the system at least to:
submit the subset to the client by adding the samples from the subset to a buffer; and
flush the buffer in response to the machine learning model completing an epoch of training.

6. The system of claim 1 wherein:
the at least one memory and the computer program code is further configured to, with the at least one processor, cause the system at least to:
receive the replacement labels from the client while performing training of the machine learning model during an epoch, wherein the replacement labels from the client provided during an epoch are used for training data for a next epoch.

7. The system of claim 1 wherein:
the at least one memory and the computer program code is further configured to, with the at least one processor, cause the system at least to:
halt training of the machine learning model, based on a classification performance score of the machine learning model.

8. The system of claim 7 wherein:
the at least one memory and the computer program code is further configured to, with the at least one processor, cause the system at least to:
halt selecting and submitting samples to the client, based on a classification performance score of the machine learning model.

9. The system of claim 1 wherein:
the at least one memory and the computer program code is further configured to, with the at least one processor, cause the system at least to:
determine the uncertainty as a score via at least one technique of entropy calculation, similarity of samples, calculated distance of samples, or model uncertainty.

10. The system of claim 1 wherein:
the at least one memory and the computer program code is further configured to, with the at least one processor, cause the system at least to:
include a predefined number of samples having a highest amount of uncertainty within the subset.

11. The system of claim 1 wherein:
the at least one memory and the computer program code is further configured to, with the at least one processor, cause the system at least to:
initiate the training, and submission of the subset to a client for replacement labels, in response to a request that defines classes for the labels, includes a pointer to the set of the samples, and defines an end condition for halting training of the machine learning model and halting labeling of the samples.

12. The system of claim 1 wherein:
the at least one memory and the computer program code is further configured to, with the at least one processor, cause the system at least to:
activate a model-optimization routine for the machine learning model in response to determining that a change in performance of the machine learning model across the epochs is less than a threshold amount.

13. The system of claim 1 wherein:
the at least one memory and the computer program code is further configured to, with the at least one processor, cause the system at least to:
calculate the ranking score by determining a score for each object depicted within a sample, and aggregating the scores for the objects within the sample.

14. The system of claim 1, wherein:
the at least one memory and the computer program code is further configured to, with the at least one processor, cause the system at least to:
supplement the training data for the machine learning model with the set of the samples, wherein the labels predicted by the machine learning model for the subset are replaced with corresponding replacement labels from the client; and
train the machine learning model with the training data that was supplemented.

15. The system of claim 1, wherein:
the at least one memory and the computer program code is further configured to, with the at least one processor, cause the system at least to:
supplement prior, already labeled training data for the machine learning model with the subset of the samples, and utilize a whole training set comprising the subset and the prior training data as to train the machine learning model.
